# EUROPEAN PATENT APPLICATION

(11) **EP 4 741 270 A1**
(43) Date of publication of application: **13.05.2026**
(21) Application number: 25209557.5
(22) Date of filing: 17.10.2025
(51) Int. Cl.: B62M 1/10, B62M 9/10, F16H 55/14, F16H 55/30

(54) **BICYCLE POWER TRANSMISSION DEVICE**

(30) Priority: 06.11.2024 JP 2024194361
(71) Applicant: Exedy Corporation, Neyagawa-shi, Osaka 572-8570 (JP)
(72) Inventor: HARIMA, Kenji, Osaka, 572-8570 (JP); OHSHIMA, Hiroshi, Osaka, 572-8570 (JP)
(74) Representative: KASTEL Patentanwälte PartG mbB

(57) **Abstract**

It is intended to control in which direction a coil spring protrudes. The present bicycle power transmission device includes a first rotor, a first plate, a second plate, and a coil spring. The first rotor includes a hub portion, a flanged portion, and an accommodation hole. The hub portion extends in an axial direction. The flanged portion extends radially outward from the hub portion. The accommodation hole is provided in the flanged portion. The first plate is disposed on a first side of the flanged portion in the axial direction. The first plate is disposed to be rotatable relative to the flanged portion. The second plate is disposed on a second side of the flanged portion in the axial direction. The second plate is configured to be rotated unitarily with the first plate. The coil spring is disposed in the accommodation hole. The coil spring elastically couples the first rotor and both the first and second plates therethrough to each other. The flanged portion slants in the axial direction.

## Description

### CROSS-REFERENCE TO RELATED APPLICATIONS

This application is based on and claims the priority benefit of Japanese application No. 2024-194361 filed on November 6, 2024, the contents of which are incorporated herein by reference.

### TECHNICAL FIELD

The present invention relates to a bicycle power transmission device.

### BACKGROUND

A bicycle power transmission device includes a first rotor, a first plate, and a second plate (see e.g., Japan Laid-open Patent Application Publication No. 2024-084007). The first and second plates are configured to be rotated unitarily with each other. The first rotor and both the first and second plates are elastically coupled to each other through coil springs. When described in detail, the coil springs are disposed in accommodation holes of the first rotor, window portions of the first plate, and window portions of the second plate, respectively.

### SUMMARY OF THE INVENTION

It is an object of the present invention to provide a bicycle power transmission device enabled to control in which direction a coil spring protrudes.

A bicycle power transmission device according to a first aspect includes a first rotor, a first plate, a second plate, and a coil spring. The first rotor includes a hub portion, a flanged portion, and an accommodation hole. The hub portion extends in an axial direction. The flanged portion extends radially outward from the hub portion. The accommodation hole is provided in the flanged portion. The first plate is disposed on a first side of the flanged portion in the axial direction. The first plate is disposed to be rotatable relative to the flanged portion. The second plate is disposed on a second side of the flanged portion in the axial direction. The second plate is configured to be rotated unitarily with the first plate. The coil spring is disposed in the accommodation hole. The coil spring elastically couples the first rotor and both the first and second plates therethrough to each other. The flanged portion slants in the axial direction.

According to the configuration, the flanged portion slants in the axial direction; hence, the flanged portion is made contactable with the coil spring at a position displaced from the center of the coil spring. Because of this, when the coil spring is pressed by the flanged portion and is thereby compressed, the coil spring is simultaneously applied with a rotation-directional load and an axial load oriented in opposition to the slant direction of the flanged portion. Thus, it is made possible to control in which direction the coil spring protrudes by slanting the flanged portion to a side that is not preferable for protrusion of the coil spring in the axial direction.

A bicycle power transmission device according to a second aspect relates to the bicycle power transmission device according to the first aspect and further includes a sprocket attached to the first plate. The flanged portion slants to the second side in the axial direction.

A bicycle power transmission device according to a third aspect relates to the bicycle power transmission device according to the first or second aspect and further includes a crank arm attached to an axially second-side end of the hub portion. The flanged portion slants to the second side in the axial direction. According to the configuration, it is made possible to prevent the coil spring from protruding toward the crank arm, i.e., toward a rider of a bicycle.

A bicycle power transmission device according to a fourth aspect relates to the bicycle power transmission device according to any of the first to third aspects and is configured as follows. The flanged portion includes a flange body and a slant portion. The flange body extends radially outward from the hub portion. The slant portion extends radially outward from an outer peripheral end of the flange body. The slant portion slants in the axial direction.

A bicycle power transmission device according to a fifth aspect relates to the bicycle power transmission device according to the fourth aspect and is configured as follows. The accommodation hole is provided across the flange body and the slant portion.

A bicycle power transmission device according to a sixth aspect relates to the bicycle power transmission device according to the fourth or fifth aspect and is configured as follows. The coil spring is contacted at an end surface thereof with the flange body and the slant portion.

A bicycle power transmission device according to a seventh aspect relates to the bicycle power transmission device according to any of the first to sixth aspects and is configured as follows. The hub portion has a cylindrical shape. The first rotor includes a plurality of protruding portions and a plurality of relief portions. The plurality of protruding portions are provided on an inner peripheral surface of the hub portion to extend therefrom in the axial direction. Each of the plurality of relief portions is provided on at least one of both axial ends of each of the plurality of protruding portions.

Overall, according to the present invention, it is made possible to control in which direction the coil spring protrudes.

### BRIEF DESCRIPTION OF THE DRAWINGS

FIG. 1 is a cross-sectional view of a bicycle power transmission device.
FIG. 2 is a front view of the bicycle power transmission device.
FIG. 3 is a front view of a first rotor.
FIG. 4 is a cross-sectional view of the first rotor taken along line IV-IV in FIG. 3.
FIG. 5 is a side view of a stopper member.

### DETAILED DESCRIPTION

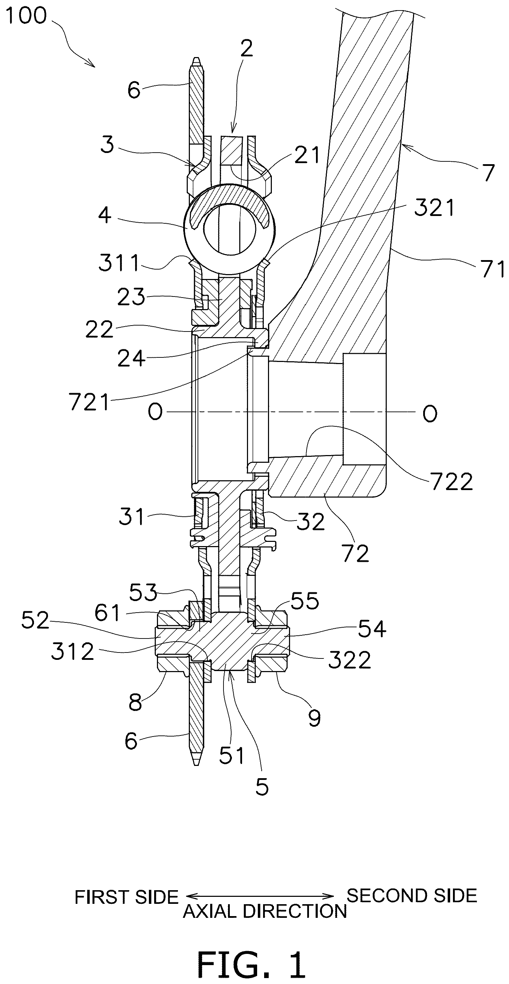

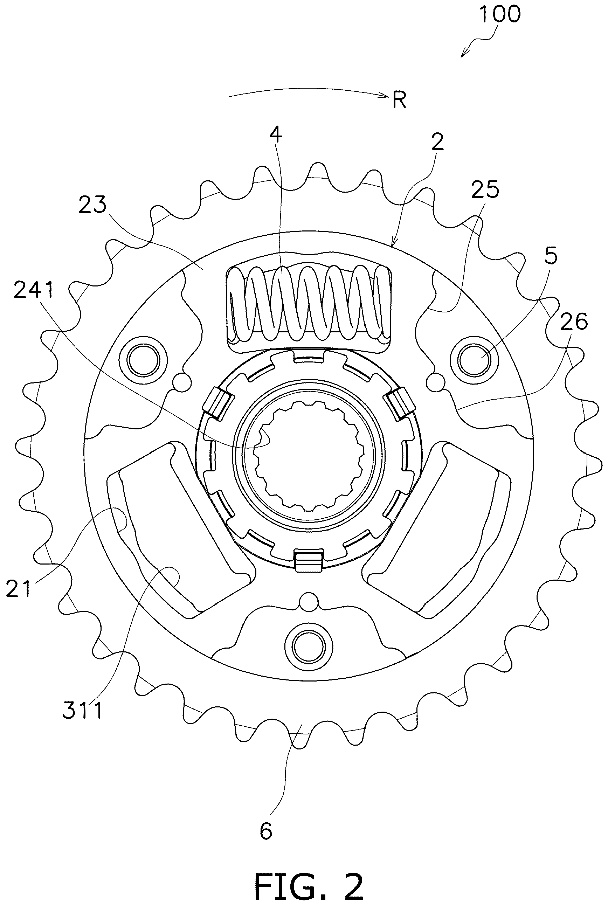

A bicycle power transmission device 100 according to the present preferred embodiment (hereinafter simply referred to as "power transmission device 100" on an as-needed basis) will be hereinafter explained with reference to drawings. It should be noted that in the following explanation, the term "axial direction" refers to an extending direction of a rotational axis O of the power transmission device 100. On the other hand, the term "circumferential direction" refers to a circumferential direction of an imaginary circle about the rotational axis O, whereas the term "radial direction" refers to a radial direction of the imaginary circle about the rotational axis O. The term "first side in the axial direction" indicates the left side in FIG. 1, whereas the term "second side in the axial direction" indicates the right side in FIG. 1. Yet on the other hand, the term "rotational direction R" refers to a direction that the power transmission device 100 is rotated in traveling of a bicycle in which the power transmission device 100 is installed. The rotational direction R indicates the clockwise direction in FIG. 2.

FIG. 1 is a cross-sectional view of the power transmission device 100. As shown in FIG. 1, the power transmission device 100 includes a first rotor 2, a second rotor 3, a plurality of coil springs 4, a plurality of stopper members 5, a sprocket 6, a crank arm 7, a plurality of first nuts 8, and a plurality of second nuts 9. The power transmission device 100 is disposed to be rotatable about the rotational axis O.

The power transmission device 100 is installed in the bicycle. For example, the power transmission device 100 is installed in a type of bicycle without including an electric motor or so forth, i.e., a type of bicycle driven only by a human power. It should be noted that the power transmission device 100 may be installed in another type of bicycle including an electric motor. In this case, for instance, the bicycle may have two modes: an electric mode for driving the bicycle only by the electric motor and a human power mode for driving the bicycle only by the human power. It should be noted that the bicycle may have an assist mode for driving the bicycle by both the electric motor and the human power, or alternatively, may not have the assist mode. The power transmission device 100 is configured to transmit a torque, inputted to a pedal (omitted in illustration) attached to a distal end of the crank arm 7, to a drive wheel (omitted in illustration).

FIG. 2 is a front view of the power transmission device 100 from which some of the coil springs 4, the crank arm 7, and a second plate 32 of the second rotor 3 (to be described) are detached. As shown in FIG. 2, the power transmission device 100 is configured to be rotated in the rotational direction R (clockwise in FIG. 2).

### <First Rotor>

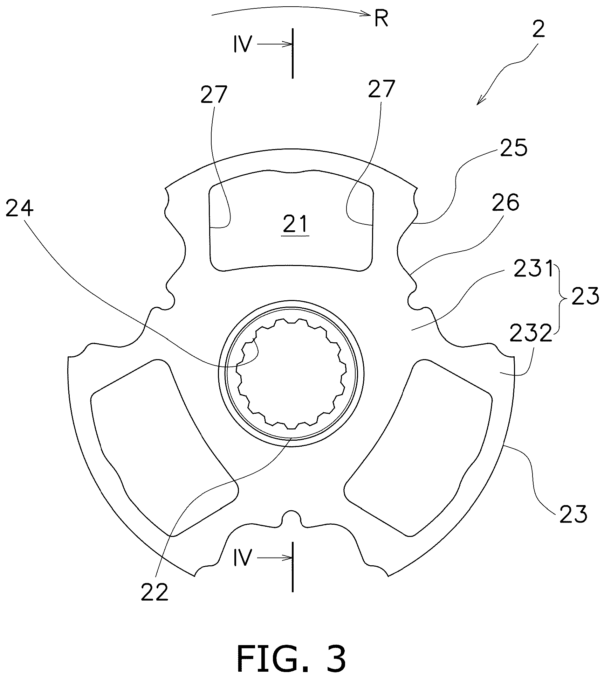

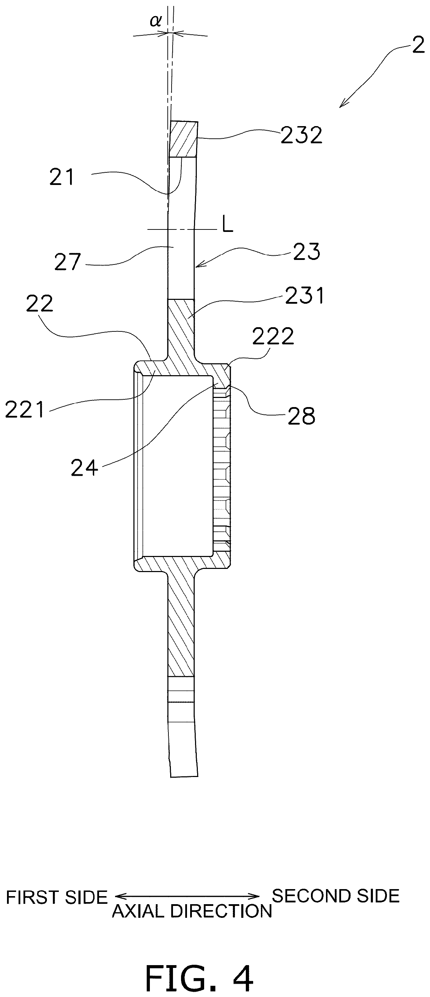

FIG. 3 is a front view of the first rotor 2, whereas FIG. 4 is a cross-sectional view of the first rotor 2 taken along line IV-IV in FIG. 3. As shown in FIGS. 3 and 4, the first rotor 2 includes a plurality of accommodation holes 21. It should be noted that in the present preferred embodiment, the first rotor 2 includes three accommodation holes 21. The accommodation holes 21 penetrate the first rotor 2 in the axial direction. The accommodation holes 21 are disposed at intervals in the circumferential direction. The accommodation holes 21 are disposed at equal intervals.

The first rotor 2 includes a plurality of contact surfaces 27. The contact surfaces 27 are surfaces in contact with the coil springs 4. When described in detail, among the surfaces by which each accommodation hole 21 is defined, each contact surface 27 is the one in contact with an end surface of each coil spring 4. In other words, the first rotor 2 includes a pair of contact surfaces 27 in each accommodation hole 21. Both the pair of contact surfaces 27 are opposed to each other, while being oriented in the circumferential direction.

The first rotor 2 is disposed to be rotatable in the rotational direction R. The first rotor 2 receives the torque inputted thereto from the crank arm 7. The first rotor 2 is configured to be rotated unitarily with the crank arm 7. The first rotor 2 includes a hub portion 22, a flanged portion 23, a plurality of protruding portions 24, and a plurality of relief portions 28.

The hub portion 22 is made in the shape of a cylinder extending in the axial direction. In a condition that the power transmission device 100 has been installed in the bicycle, a crankshaft (omitted in illustration) extends inside the hub portion 22.

The hub portion 22 includes a hub body 221 and a small diameter portion 222. The hub body 221 is made in the shape of a cylinder extending in the axial direction. The small diameter portion 222 is disposed on one of the ends of the hub portion 22. When described in detail, the small diameter portion 222 is disposed on the axially second-side end of the hub portion 22. The small diameter portion 222 is made in the shape of a cylinder extending in the axial direction. The small diameter portion 222 is smaller in inner diameter than the hub body 221.

The flanged portion 23 extends radially outward from the hub portion 22. The flanged portion 23 is provided with the accommodation holes 21. The accommodation holes 21 penetrate the flanged portion 23 in the axial direction. The flanged portion 23 is provided on an axially middle part of the hub portion 22. The flanged portion 23 is disposed in a different axial position from the small diameter portion 222. In other words, the small diameter portion 222 does not overlap with the flanged portion 23 as seen in the radial direction.

The flanged portion 23 slants in the axial direction. When described in detail, the flanged portion 23 slants to the second side in the axial direction. The flanged portion 23 slants to gradually approach the second plate 32 to the radially outer side. The flanged portion 23 slants to separate from a first plate 31 to which the sprocket 6 is attached. Besides, the flanged portion 23 slants toward the crank arm 7.

The flanged portion 23 includes a flange body 231 and a slant portion 232. The flange body 231 extends radially outward from the hub portion 22. The flange body 231 does not slant in the axial direction. In other words, the flange body 231 extends approximately in parallel to an imaginary plane orthogonal to the rotational axis O. The flange body 231 is made in the shape of an annulus extending in the circumferential direction.

The slant portion 232 extends radially outward from the outer peripheral end of the flange body 231. The slant portion 232 slants in the axial direction. When described in detail, the slant portion 232 slants to the second side in the axial direction. Thus, the flanged portion 23 slants at the slant portion 232 in the axial direction without slanting at the flange body 231. The slant portion 232 corresponds to an outer peripheral part of the flanged portion 23. The slant portion 232 is made in the shape of an annulus extending in the circumferential direction. A tilt angle of the slant portion 232, shown as a tilt angle α, is not particularly limited in magnitude but can be set to be, for instance, about 1° to 5°. It should be noted that the tilt angle α refers to an angle formed between the imaginary plane orthogonal to the rotational axis O and the slant portion 232.

In FIG. 4, line L indicates a boundary between the flange body 231 and the slant portion 232. Each accommodation hole 21 is provided across the flange body 231 and the slant portion 232. Because of this, each contact surface 27 extends across the flange body 231 and the slant portion 232. Each coil spring 4 is in contact at the end surfaces thereof with the flange body 231 and the slant portion 232.

The slant portion 232 is in contact with each coil spring 4 at a position displaced from the center of each coil spring 4 in the axial direction. When described in detail, the slant portion 232 is in contact with each coil spring 4 at a position displaced from the center of each coil spring 4 to the second side in the axial direction. Because of this, when the slant portion 232 presses each coil spring 4, each coil spring 4 is applied with a load oriented to the first side in the axial direction.

The protruding portions 24 axially extend on the inner peripheral surface of the hub portion 22. When described in detail, the protruding portions 24 are provided on the inner peripheral surface of the small diameter portion 222 of the hub portion 22. The protruding portions 24 are aligned in the circumferential direction. The protruding portions 24 compose a spline hole 241 in the interior of the hub portion 22.

The relief portions 28 are provided on the axially second-side ends of the protruding portions 24 on a one-to-one correspondence. The relief portions 28 are formed by cutting the axially second-side ends of the protruding portions 24, respectively. The relief portions 28 are configured to accommodate burrs produced when the protruding portions 24 are formed. In other words, the relief portions 28 are provided to serve as accommodation spaces. The relief portions 28 accommodate the burrs produced when the protruding portions 24 are formed; hence, it is made possible to inhibit burrs from being produced from the hub portion 22 on the second side in the axial direction.

The first rotor 2 includes a plurality of stopper surfaces 25. When described in detail, the first rotor 2 includes a plurality of cutout portions 26. The cutout portions 26 are disposed at intervals in the circumferential direction. Each cutout portion 26 is disposed between each pair of accommodation holes 21 in the circumferential direction. Each cutout portion 26 opens radially outward. Among the inner wall surfaces by which each cutout portion 26 is defined, the one oriented in the rotational direction R serves as each stopper surface 25.

Each stopper surface 25 is oriented in the circumferential direction. When described in detail, each stopper surface 25 is oriented in the rotational direction R. Each stopper surface 25 is opposed to each stopper portion 51 at an interval in the circumferential direction.

The first rotor 2 can be made of, for instance, iron, stainless steel, carbon fiber reinforced plastics (CFRP), or so forth.

### <Second Rotor>

As shown in FIG. 1, the second rotor 3 is disposed to be rotatable in the rotational direction R. The second rotor 3 is disposed to be rotatable relative to the first rotor 2. The second rotor 3 includes the first plate 31 and the second plate 32. The first and second plates 31 and 32 are configured to be rotated unitarily with each other. The first and second plates 31 and 32 are disposed to be rotatable relative to the flanged portion 23.

The first and second plates 31 and 32 are disposed away from each other at an interval in the axial direction. The first rotor 2 is disposed between the first and second plates 31 and 32. In other words, the first and second plates 31 and 32 are disposed to interpose the first rotor 2 therebetween in the axial direction. When described in detail, the flanged portion 23 of the first rotor 2 is disposed axially between the first and second plates 31 and 32. The first plate 31 is disposed on the first side of the flanged portion 23 in the axial direction. The second plate 32 is disposed on the second side of the flanged portion 23 in the axial direction.

The first plate 31 has a disc shape and includes an opening in a middle part thereof. The hub portion 22 of the first rotor 2 extends inside the opening of the first plate 31 in the axial direction.

The first plate 31 includes a plurality of first window portions 311. In the present preferred embodiment, the first plate 31 includes three first window portions 311. The first window portions 311 penetrate the first plate 31 in the axial direction. The first window portions 311 are disposed away from each other at intervals in the circumferential direction.

The first plate 31 includes a plurality of first through holes 312. The first through holes 312 are disposed away from each other at intervals in the circumferential direction. The first window portions 311 and the first through holes 312 are alternately disposed in the circumferential direction.

The second plate 32 has a disc shape and includes an opening in a middle part thereof. The hub portion 22 of the first rotor 2 extends inside the opening of the second plate 32 in the axial direction. The second plate 32 is configured to be rotated unitarily with the first plate 31. When described in detail, the first and second plates 31 and 32 are fastened to each other by the plural stopper members 5.

The second plate 32 includes a plurality of second window portions 321. In the present preferred embodiment, the second plate 32 includes three second window portions 321. The second window portions 321 penetrate the second plate 32 in the axial direction. The second window portions 321 are disposed away from each other at intervals in the circumferential direction. As seen in the axial direction, the second window portions 321 overlap with the first window portions 311 on a one-to-one correspondence.

The second plate 32 includes a plurality of second through holes 322. The second through holes 322 are disposed away from each other at intervals in the circumferential direction. The second window portions 321 and the second through holes 322 are alternately disposed in the circumferential direction. As seen in the axial direction, the second through holes 322 overlap with the first through holes 312 on a one-to-one correspondence.

The first and second plates 31 and 32 can be made of, for instance, iron, stainless steel, carbon fiber reinforced plastics (CFRP), or so forth.

### <Coil Springs>

The coil springs 4 are accommodated in the accommodation holes 21, the first window portions 311, and the second window portions 321, respectively. The coil springs 4 elastically couple the first rotor 2 and both the first and second plates 31 and 32 therethrough to each other in the rotational direction R. In other words, the torque, outputted from the first rotor 2, is transmitted to the first and second plates 31 and 32 through the coil springs 4. Besides, the coil springs 4 are rotated together with the first rotor 2, the first plate 31, and the second plate 32. When the torque is transmitted, the coil springs 4 are compressed, whereby torsion (relative rotation) is caused between the first rotor 2 and the second rotor 3. When the coil springs 4 are not being compressed, the torsion is not caused between the first rotor 2 and the second rotor 3; hence, the angle of torsion is 0 degrees.

### <Sprocket>

The sprocket 6 is attached to the first plate 31. The sprocket 6 is attached to the first plate 31 by the stopper members 5, the first nuts 8, and the second nuts 9. The sprocket 6 is rotated unitarily with the first and second plates 31 and 32. The sprocket 6 includes a plurality of teeth on the outer peripheral end thereof. A chain (omitted in illustration) is wrapped around the sprocket 6, whereby the torque is transmitted from the sprocket 6 to the drive wheel (omitted in illustration) through the chain and so forth.

The sprocket 6 includes a plurality of engaging holes 61. The engaging holes 61 are disposed away from each other at intervals in the circumferential direction. As seen in the axial direction, the engaging holes 61 overlap with not only the first through holes 312 but also the second through holes 322 on a one-to-one correspondence.

### <Stopper Members>

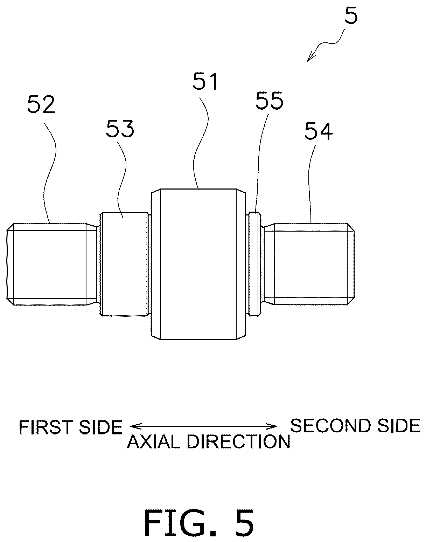

FIG. 5 is a side view of each stopper member 5. As shown in FIGS. 1 and 5, the stopper members 5 fasten the first and second plates 31 and 32 therethrough to each other in cooperation with the first nuts 8 and the second nuts 9 such that the first and second plates 31 and 32 are made detachable from each other. Besides, the sprocket 6 is fastened to the first plate 31 by the stopper members 5 and the first nuts 8. The stopper members 5 are attached to the second rotor 3. The stopper members 5 are configured to be rotated unitarily with the second rotor 3.

Each stopper member 5 includes the stopper portion 51, a first screw portion 52, a first intermediate portion 53, a second screw portion 54, and a second intermediate portion 55. The stopper portion 51, the first screw portion 52, the first intermediate portion 53, the second screw portion 54, and the second intermediate portion 55 are integrated with each other. When described in detail, the stopper portion 51, the first screw portion 52, the first intermediate portion 53, the second screw portion 54, and the second intermediate portion 55 are integrated as a single member. Each stopper member 5 is solid and the interior thereof is not hollowed out.

The stopper portion 51 has a columnar shape. The stopper portion 51 extends in the axial direction. The stopper portion 51 is opposed to each stopper surface 25 in the circumferential direction. The stopper portion 51 is disposed axially between the first plate 31 and the second plate 32. The stopper portion 51 is sandwiched by the first plate 31 and the second plate 32. The stopper portion 51 is disposed in each cutout portion 26 of the first rotor 2.

The first screw portion 52 is integrated with the stopper portion 51. The first screw portion 52 extends in the axial direction. The first screw portion 52 is provided with threads on the outer peripheral surface thereof. The first screw portion 52 is smaller in outer diameter than the stopper portion 51.

The first screw portion 52 is disposed on the first side of the stopper portion 51 in the axial direction. The first screw portion 52 is disposed on the first side of the first plate 31 in the axial direction. Besides, the first screw portion 52 is disposed on the first side of the sprocket 6 in the axial direction.

The first intermediate portion 53 is disposed axially between the stopper portion 51 and the first screw portion 52. Specifically, the first intermediate portion 53 extends from the stopper portion 51 to the first side in the axial direction. Besides, the first screw portion 52 extends from the first intermediate portion 53 to the first side in the axial direction.

The first intermediate portion 53 has a columnar shape. The first intermediate portion 53 extends in the axial direction. The length of the first intermediate portion 53 is smaller in magnitude than the total thickness of the first plate 31 and the sprocket 6. Besides, the length of the first intermediate portion 53 is larger in magnitude than the thickness of the first plate 31. It should be noted that the length of each portion in each stopper member 5 means the axial dimension thereof.

The first intermediate portion 53 is smaller in outer diameter than the stopper portion 51 but is larger in outer diameter than the first screw portion 52. The first intermediate portion 53 is disposed inside each first through hole 312 and each engaging hole 61. The first intermediate portion 53 does not protrude from inside each first through hole 312 and each engaging hole 61 to the first side in the axial direction.

The second screw portion 54 is integrated with the stopper portion 51. The second screw portion 54 extends in the axial direction. The second screw portion 54 is provided with threads on the outer peripheral surface thereof. The second screw portion 54 is smaller in outer diameter than the stopper portion 51. The second screw portion 54 is approximately equal in outer diameter to the first screw portion 52.

The second screw portion 54 is disposed on the second side of the stopper portion 51 in the axial direction. The second screw portion 54 is disposed on the second side of the second plate 32 in the axial direction.

The second intermediate portion 55 is disposed axially between the stopper portion 51 and the second screw portion 54. Specifically, the second intermediate portion 55 extends from the stopper portion 51 to the second side in the axial direction. Besides, the second screw portion 54 extends from the second intermediate portion 55 to the second side in the axial direction.

The second intermediate portion 55 has a columnar shape. The second intermediate portion 55 extends in the axial direction. The second intermediate portion 55 is smaller in length than the first intermediate portion 53. The length of the second intermediate portion 55 is smaller in magnitude than the thickness of the second plate 32.

The second intermediate portion 55 is smaller in outer diameter than the stopper portion 51 but is larger in outer diameter than the second screw portion 54. The second intermediate portion 55 is approximately equal in outer diameter to the first intermediate portion 53. The second intermediate portion 55 is disposed inside each second through hole 322. The second intermediate portion 55 does not protrude from inside each second through hole 322 to the second side in the axial direction.

### <First and Second Nuts>

Each first nut 8 is screwed onto the first screw portion 52. In cooperation with the stopper portion 51, each first nut 8 interposes and holds the sprocket 6 and the first plate 31 therebetween. Each first nut 8 is a flanged nut.

Each second nut 9 is screwed onto the second screw portion 54. In cooperation with the stopper portion 51, each second nut 9 interposes and holds the second plate 32 therebetween. Each second nut 9 is a flanged nut.

### <Crank Arm>

As shown in FIG. 1, the crank arm 7 is configured to be rotated unitarily with the first rotor 2. In other words, the crank arm 7 is disposed to be rotatable about the rotational axis O. The crank arm 7 is attached to the axially second-side end of the hub portion 22 of the first rotor 2. When described in detail, the crank arm 7 is configured to be spline-coupled to the spline hole 241 composed of the plural protruding portions 24 on the inner peripheral surface of the hub portion 22.

The crank arm 7 includes an arm body 71 and an attachment portion 72. The arm body 71 extends in the radial direction. The attachment portion 72 extends from one of both ends of the arm body 71 in the axial direction. It should be noted that the pedal (omitted in illustration) is attached to the other of both ends of the arm body 71.

The attachment portion 72 is smaller in outer diameter at a distal end 721 thereof than at the remaining part thereof. The distal end 721 is spline-coupled to the spline hole 241 composed of the plural protruding portions 241. Besides, the distal end 721 penetrates the spline hole 241 in the axial direction. Then, the distal end 721 is fixed to the protruding portions 24 by swaging. When described in detail, the distal end 721 and the protruding portions 24 are firmly attached to each other by swaging of the distal end 721. Besides, a part of the distal end 721, protruding from the protruding portions 24 to the first side in the axial direction, is enlarged in outer diameter by swaging; namely, the outer diameter of the protruding part is made larger in magnitude than the inner diameter of the spline hole 241. As a result, the distal end 721 is prevented from coming off from the spline hole 241; hence, the crank arm 7 and the first rotor 2 can be prevented from moving away from each other to the opposite sides in the axial direction.

The attachment portion 72 includes an attachment hole 722. The attachment hole 722 has a rectangular shape as seen in the axial direction. The crankshaft (omitted in illustration) is fitted to the attachment hole 722, whereby the crank arm 7 is rotated unitarily with the crankshaft.

### <Action>

The action of the power transmission device 100 configured as described above will be explained. First, when a torque is inputted to the first rotor 2 through the crank arm 7 by pedaling of a user, the first rotor 2 is rotated in the rotational direction R. Then, the torque is transmitted from the first rotor 2 to the second rotor 3 through the coil springs 4. As a result, the second rotor 3 is rotated in the rotational direction R, whereby the torque is transmitted to the drive wheel.

Here, when the angle of torsion between the first rotor 2 and the second rotor 3 reaches a predetermined angle by compression of the coil springs 4, the stopper surfaces 25 are contacted with the stopper portions 51, respectively. Thus, when the stopper portions 51 are contacted by the stopper surfaces 25, respectively, the first rotor 2 is restricted from rotating relative to the second rotor 3 any further from the position. In other words, the first rotor 2 is rotated relative to the second rotor 3 until the stopper members 5 are contacted by the stopper surfaces 25, respectively. Then, the first rotor 2 is rotated unitarily with the second rotor 3 after the stopper portions 51 are contacted by the stopper surfaces 25, respectively. The angle of torsion between the first rotor 2 and the second rotor 3 is maximized (hereinafter referred to as "maximum angle of torsion") when the stopper surfaces 25 are contacted with the stopper portions 51, respectively. It should be also noted that the angle of torsion between the first rotor 2 and the second rotor 3 is 0 degrees when the torque has not been inputted to the power transmission device 100.

### [Modifications]

One preferred embodiment of the present invention has been explained above. However, the present invention is not limited to the above, and a variety of changes can be made without departing from the gist of the present invention. It should be noted that basically speaking, respective modifications to be described are applicable simultaneously.
(a) In the preferred embodiment described above, the flanged portion 23 slants only at the slant portion 232 without entirely slanting; however, the flanged portion 23 is not limited in configuration to this. For example, the flanged portion 23 may entirely slant in the axial direction.
(b) In the preferred embodiment described above, the flanged portion 23 slants to the second side in the axial direction; however, the flanged portion 23 is not limited in configuration to this. For example, the flanged portion 23 may slant to the first side in the axial direction.
(c) In the preferred embodiment described above, the crank arm 7 is attached to the first rotor 2, whereas the sprocket 6 is attached to the second rotor 3; however, the power transmission device 100 is not limited in configuration to this. For example, the crank arm 7 may be attached to the first or second plate 31, 32 of the second rotor 3, whereas the sprocket 6 may be attached to the first rotor 2.
(d) In the preferred embodiment described above, the relief portions 28 are provided on the axially second-side ends of the protruding portions 24, respectively. Alternatively, the relief portions 28 may be provided on the axially first-side ends of the protruding portions 24, respectively. Yet alternatively, the relief portions 28 may be provided on not only the axially first-side ends of the protruding portions 24 but also the axially second-side ends of the protruding portions 24, respectively.

### LIST OF REFERENCE NUMERALS

2 First rotor,
21 Accommodation hole,
22 Hub portion,
23 Flanged portion,
231 flange body,
232 Slant portion,
24 Protruding portion,
28 Relief portion,
31 First plate,
32 Second plate,
4 Coil spring,
6 Sprocket,
7 Crank arm,
100 Bicycle power transmission device

## Claims

1. A bicycle power transmission device comprising:
a first rotor including
a hub portion extending in an axial direction,
a flanged portion extending radially outward from the hub portion, and
an accommodation hole provided in the flanged portion;
a first plate disposed on a first side of the flanged portion in the axial direction, the first plate disposed to be rotatable relative to the flanged portion;
a second plate disposed on a second side of the flanged portion in the axial direction, the second plate configured to be rotated unitarily with the first plate; and
a coil spring disposed in the accommodation hole, the coil spring elastically coupling the first rotor and both the first and second plates therethrough to each other, wherein
the flanged portion slants in the axial direction.

2. The bicycle power transmission device according to claim 1, further comprising:
a sprocket attached to the first plate, wherein
the flanged portion slants to the second side in the axial direction.

3. The bicycle power transmission device according to claim 1, further comprising:
a crank arm attached to an axially second-side end of the hub portion, wherein
the flanged portion slants to the second side in the axial direction.

4. The bicycle power transmission device according to claim 1, wherein the flanged portion includes
a flange body extending radially outward from the hub portion, and
a slant portion extending radially outward from an outer peripheral end of the flange body, the slant portion slanting in the axial direction.

5. The bicycle power transmission device according to claim 4, wherein the accommodation hole is provided across the flange body and the slant portion.

6. The bicycle power transmission device according to claim 4, wherein the coil spring is contacted at an end surface thereof with the flange body and the slant portion.

7. The bicycle power transmission device according to claim 1, wherein
the hub portion has a cylindrical shape, and
the first rotor includes
a plurality of protruding portions provided on an inner peripheral surface of the hub portion to extend therefrom in the axial direction, and
a plurality of relief portions, each of the plurality of relief portions provided on at least one of both axial ends of each of the plurality of protruding portions.
